# EUROPÄISCHE PATENTSCHRIFT

(11) **EP 0 465 967 B1**
(45) Veröffentlichungstag und Bekanntmachung des Hinweises auf die Patenterteilung: **03.04.1996**
(21) Anmeldenummer: 91110828.0
(22) Anmeldetag: 29.06.1991
(51) Int. Cl.: C08G 64/40, C08J 3/14, C08G 64/06, C08G 64/08, C08G 77/448

(54) **Kontinuierliche Abscheidung aromatischer Polycarbonate in teilkristalliner Form aus Lösungen in CH2CL2**
Continuous separation of aromatic polycarbonates in semicrystalline form from CH2Cll2 solutions
Séparation continue de polycarbonates aromatiques dans un état semi-cristallin de solutions de CH2Cll2

(30) Priorität: 12.07.1990 DE 4022232
(43) Veröffentlichungstag der Anmeldung: 15.01.1992
(73) Patentinhaber: BAYER AG, D-51368 Leverkusen (DE)
(72) Erfinder: Tacke, Peter, Dr., W-4150 Krefeld (DE); Fengler, Gerd, Dr., W-4150 Krefeld (DE); Grigo, Ulrich, Dr., W-4152 Kempen (DE); Köhler, Karl-Heinz, Dr., W-4150 Krefeld (DE); Weber, Wolfram, Dr., W-4150 Krefeld (DE)

(56) Entgegenhaltungen:
- DE-A- 2 721 848
- DE-A- 2 825 857
- DE-A- 4 038 967
- DE-B- 1 291 119
- GB-A- 1 494 052
- PATENT ABSTRACTS OF JAPAN, vol. 8, no. 158 (M-311), 21. Juli 1984

## Beschreibung

Die vorliegende Erfindung betrifft ein Verfahren zur Abscheidung von Polycarbonat (PC) auf Basis von hauptsächlich 2,2-Bis-(4-hydroxyphenyl)-propan (BPA) aus Lösungen in CH₂Cl₂ in teilkristalliner Form durch Eindampfen der PC-Lösungen in Gegenwart von teilkristallinem PC. Aus dem so erhaltenen teilkristallinen PC kann restliches CH₂Cl₂ bei erhöhter Temperatur leicht vollständig ausgedampft werden.

Bei der Herstellung von PC nach dem Phasengrenzflächenverfahren (PGFV) werden als mit Wasser nicht oder nur wenig mischbare organische Lösungsmittel wegen ihrer besonders guten Lösefähigkeit für PC vorzugsweise tiefsiedende Chloralkane, z.B. Dichlormethan, Trichlormethan, Dichlorethane verwendet. Als weitere Lösungsmittel sind u.a. zu nennen:
Chlorbenzole, alkylierte Aromaten, wie z.B. Toluol, Xylole, weitertun auch Alkane, wie z.B. Cyclohexan, außerdem niedere Dialkylcarbonate. Alle diese Lösungsmittel können entweder einzeln oder im Gemisch eingesetzt werden. Zur Abscheidung des fertigen PC aus Lösungen sind verschiedene Methoden entwickelt worden:
Die nach dem Phasengrenzflächenverfahren erhaltene PC-Lösung kann über verschiedene Stufen eingedampft werden, wobei die letzte Stufe im allgemeinen eine Extrusion bei relativ hoher Temperatur und somit eine thermische Belastung bedeutet.

Weiterhin kann PC aus seinen Lösungen ausgefällt werden. Als Fällungsmittel kommen z.B. Aceton, aliphatische Alkohole, aliphatische und aromatische Kohlenwasserstoffe in Betracht. Diese Verfahren sind jedoch sehr aufwendig. Es müssen große Mengen Lösungsmittel im Kreislauf geführt werden.

Außerdem ist zur Abtrennung von PC aus seinen Lösungen in organischen Lösungsmitteln die Sprühverdampfung vorgeschlagen worden. Hierbei erhält man das PC jedoch in so feiner Verteilung, daß für die thermoplastische Verarbeitung zu Formteilen eine Kompaktierung vorgeschaltet werden muß, was einen erheblichen Aufwand bedeutet.

Es ist auch vorgeschlagen worden, Lösungen der PCe in niedrig siedenden, mit Wasser nicht oder nur wenig mischbaren Lösungsmitteln, gegebenenfalls nach Zumischung von Fällungsmitteln, mit heißem Wasser in Kontakt zu bringen, wobei das oder die Lösungsmittel verdampfen und das PC abgeschieden wird. Bei diesem Verfahren werden jedoch kleine Mengen Wasser in das PC eingeschlossen, die nur mit großem Aufwand daraus entfernt werden können.

Zur Vermeidung der genannten Nachteile ist nun gemäß DBP 2 721 848 die Abscheidung von PC aus CH₂Cl₂-Lösungen in Schneckenmaschinen untersucht worden. Schneckenmaschinen sind jedoch kompliziert aufgebaut und kostspielig und außerdem sind die zur Verdampfung des CH₂Cl₂ zur Verfügung stehenden Heizflächen klein, so daß mit solchen Schneckenmaschinen kaum wirtschaftliche Raum-Zeit-Ausbeuten erzielt werden können.

Weiterhin ist entsprechend DAS 1 291 119 PC aus Lösungen in niedrig siedenden organischen Lösungsmitteln durch Vermischen dieser Lösungen mit bestimmten Mindestmengen von festem PC unter Verdampfen des Lösungsmittels abgeschieden worden. Die entsprechende US-Patentschrift Nr. 3 509 094 bringt zusätzliche Beispiele.

Es wurde nun gefunden, daß diese Abscheidung von PC nur dann in wirtschaftlicher Weise durchführbar ist, wenn das als Lösung zugeführte PC in teilkristalliner Form auf dem vorgelegten festen PC unter Durchmischung abgeschieden wird. Nur aus teilkristallinem PC kann restliches Lösungsmittel in kurzer Zeit ausgedampft und ein völlig Lösungsmittel-freies PC in wirtschaftlicher Weise erhalten werden.

Es wurde weiterhin gefunden, daß die Abscheidung von teilkristallinem PC aus Lösungen in niedrig siedenden organischen Lösungsmitteln unter Abdampfen des Lösungsmittels besonders schnell durchgeführt werden kann, wenn das vorgelegte, feste PC in teilkristalliner Form eingesetzt wird.

Im Gegensatz zu den Angaben in der DAS 1 291 119 erfolgt eine Nukleierung des zugesetzten PC durch das vorgelegte teilkristalline PC. Dies zeigt sich sehr augenfällig bei Vergleich der Abscheidung von PC auf teilkristallinem und granuliertem amorphen PC. Bei Verwendung von amorphen PC dauert die Überführung des als Lösung zugeführten PC in rieselfähige teilkristalline Form wesentlich länger. Die Kristallisation des zugeführten PC kann sogar so stark gehemmt sein, daß eine Durchmischung von vorgelegtem und zugeführtem PC wegen glasiger Erstarrung und damit verbundener Überlastung des Rührers unmöglich wird. Die Durchmischung, verbunden mit der Einbringung eines Minimums an Scherenergie, ist für die Durchführung des erfindungsgemäßen Verfahrens unbedingt erforderlich.

Die Vorlegung von amorphem PC zur Abscheidung von weiterem PC aus Lösung hat noch einen weiteren Nachteil. Die amorphen Teilchen werden von den abgeschiedenen PC eingehüllt, nehmen jedoch Lösungsmittel auf, das nur mit sehr großem Aufwand aus dem Produkt vollständig entfernt werden kann.

Die Abscheidung von teilkristallinem PC auf Basis von BPA aus CH₂Cl₂-Lösung ist auch in kontinuierlicher Weise durchführbar. Hierfür wird das vorgelegte, feste, teilkristalline PC in granulierter, rieselfähiger Form in einer Vorrichtung, in der Granulat durchmischt und erhitzt werden kann, kontinuierlich oder schubweise mit der PC-Lösung unter Abdestillieren des Lösungsmittels berieselt und das granulierte, teilkristalline PC kontinuierlich oder schubweise aus der Vorrichtung abgezogen. Die Vorrichtung zur Durchmischung ist vorzugsweise als Rührbehälter oder Kneter ausgeführt.

Es wurde nun gefunden, daß PC auf Basis von BPA aus CH₂Cl₂-Lösung unter Verdampfung des Lösungsmittels kontinuierlich oder schubweise besonders vorteilhaft unter der Bedingung abgeschieden werden kann, daß der CH₂Cl₂-Gehalt im kontinuierlich durchmischten Gemisch aus vorgelegtem und teilkristallin in rieselfähiger Form aus der Lösung abgeschiedenem PC im Bereich von 21 bis 45, insbesondere 22 bis 43 und vorzugsweise 25 bis 40 Gew.-% liegt. Bei höherem Durchschnitts-CH₂Cl₂-Gehalt ist das Produkt noch zu weich, zu klebrig, das PC kristallisiert nicht schnell genug, es verbackt in weniger stark durchmischten Bereichen leicht zu größeren Klumpen und verliebt häufig die Gänge von Förderschnecken, die das Fertigprodukt aus dem Abscheidungsraum befördern. Bei kleinerem Durchschnitts-CH₂Cl₂-Gehalt ist das Produkt schon zu trocken, dem frisch eingebrachtem PC wird das Lösungsmittel zu schnell entzogen. Es kommt ebenfalls zu Verbackungen. Außerdem kann das Produkt im Abscheidungsraum in Bereichen, in denen es nicht fortwährend mit PC-Lösung benetzt wird, leicht zu Staub zermahlen werden. Staubanteile im Produkt sind unerwünscht, da sie einerseits zu Staubexplosionen führen können, andererseits die Weiterverarbeitung zu Formkörpern stören. Falls das Produkt aus dem Abscheidungsraum nicht mit einer Förderschnecke ausgetragen wird, sondern einfach über dem Rand des Abscheidungsgefäßes läuft, verlassen bei Durchschnitts-CH₂Cl₂-Gehalten außerhalb des erfindungsgemäßen Bereiches auch größere Fladen von unzureichend kristallisiertem PC den Abscheidungsraum, die sowohl die sich anschließende Ausdampfung von restlichem CH₂Cl₂ als auch die spätere Verarbeitung zu Formkörpern empfindlich stören. Beim Arbeiten im erfindungsgemäßen Bereich werden besonders einheitliche Korngrößenverteilungen erhalten. Außerdem erreicht in diesem Bereich die aufzuwendende Energie ein Minimum.

Gegenstand der vorliegenden Erfindung ist somit ein Verfahren zur kontinuierlichen oder schubweisen Überführung von PC auf Basis von ≧ 80 Mol-% BPA aus einer Lösung in CH₂Cl₂ in ein teilkristallines, rieselfähiges Granulat durch Aufgabe dieser Lösung auf vorgelegtes teilkristallines PC-Granulat unter Verdampfung des Lösungsmittels in einer Vorrichtung zur Durchmischung dieses Granulates unter fortwährender oder schubweiser Ausschleusung von Granulat, dadurch gekennzeichnet, daß in dem fortwährend durchmischten, rieselfähigen teilkristallinen PC-Granulat ein mittlerer CH₂Cl₂-Gehalt von 21 bis 45, insbesondere von 22 bis 43 und vorzugsweise 25 bis 40 Gew.-% gehalten wird.

Die Konzentration des PC in der CH₂Cl₂-Lösung, die bei dem erfindungsgemäßen Verfahren auf das vorgelegte teilkristalline PC aufgebracht wird, liegt vorzugsweise im Bereich 15 bis 25 Gew.-%. Sie soll möglichst hoch sein, um möglichst wenig CH₂Cl₂ bei der Abscheidung des teilkristallinen PC verdampfen zu müssen. Andererseits darf die Viskosität der PC-Lösung nur so groß sein, daß die Verarbeitung noch möglich ist. Die Lösung kann beispielsweise zugetropft, aufgesprüht, als Strahl aufgegeben werden. Die hier genannten Konzentrationen gelten für das Arbeiten bei Normaldruck. Bei Anwendung von Überdruck, wenn also die PC-Lösung oberhalb der normalen Siedetemperatur des CH₂Cl₂ von ca. 40°C eingesetzt wird, kann die Konzentration des PC in der Lösung auch weit oberhalb 25 Gew.-% liegen.

Die Menge des in einer gegebenen Anlage in teilkristalliner, rieselfähiger Form abscheidbarem PC, somit die Raum-Zeit-Ausbeute, hängt in erster Linie von der Heizleistung ab, die in die Anlage eingebracht werden kann und zur Verdampfung des CH₂Cl₂ zur Verfügung steht, somit von der vorhandenen Heizfläche, der Temperatur, bei der diese Heizfläche gehalten werden kann und vom Wärmeübergang.

Zur Durchführung des erfindungsgemäßen Verfahrens werden die Heizflächen bei 45 bis 200°C, vorzugsweise bei 60 bis 150°C, gehalten. Um erfindungsgemäß einen CH₂Cl₂-Gehalt von 21 bis 45 Gew.-% kontinuierlich umgewälzten teilkristallinen PC-Granulat einhalten zu können, müssen die Heizleistung, die Menge der zugeführten PC-Lösung sowie die PC-Konzentration der Lösung gut aufeinander abgestimmt sein.

Die Menge des vorgelegten teilkristallinen PC, auf dem das als CH₂Cl₂-Lösung zugegebene PC erfindungsgemäß abgeschieden wird, muß mindestens so groß sein, daß sie in der für die Abscheidung vorgesehenen Vorrichtung gerade schon wirksam durchmischt werden kann. Zur Herstellung einer teilkristallinen, rieselfähigen Ausgangsmenge PC kann beispielsweise PC als konzentrierte Lösung in CH₂Cl₂ in einem Kneter unter Verdampfung des Lösungsmittels zur Kristallisation gebracht werden. Weiterhin kristallisiert PC bei langsamer Eindampfung einer konzentrierten Lösung im Laufe von 1 bis 2 Tagen auch ohne Einbringung von Scherenenergie.

Als teilkristallin im Sinne der vorliegenden Erfindung ist PC anzusehen, das eine durch Differentialthermoanalyse bestimmbare Aufschmelzenthalpie von 5 bis 65, vorzugsweise 20 bis 45, J/g besitzt.

Wichtig für die Beurteilung des erfindungsgemäßen Verfahrens ist nicht nur die absolute Aufschmelzenthalpie als Maß für den Grad der Kristallinität. Von großem Interesse ist auch die Breite der Aufschmelzbande im Thermogramm der Differentialthermoanalyse. Eine schmale, hohe Bande weist auf gut ausgebildete Kristallite hin. Ein PC mit dieser Charakteristik kann schnell auf ca. 210°C erhitzt und im Verlauf von ca. 1 Stunde bis zur Nachweisgrenze von ca. 2 ppm vom restlichen CH₂Cl₂ befreit werden. Zeigt das Material jedoch eine breite, flache Aufschmelzbande, dann sind die Kristallite weniger gut ausgebildet. Ein solches PC fängt schon bei 180 bis 190°C an zu erweichen. Die Granulatkörner neigen deshalb bei der Ausdampfung des CH₂Cl₂ bei 210°C zur Sinterung.

Ein Maß für die Breite der Aufschmelzbande im Thermogramm ist der Wärmestrom beim Aufschmelzen, gemessen in W/g. Schmale, hohe Banden zeigen Werte von 0,6 bis 1 W/g; breite, flache Banden 0,1 bis 0,4 W/g.

Es wurde festgestellt, daß beim Kristallisieren von PC auf vorgelegtem, teilkristallinem PC von gut ausgebildeter Kristallinität (Wärmestrom 0,7 bis 1 W/g) ebensolches PC nachgebildet wird.

Wird hingegen amorphes PC vorgelegt, so erhält man zumindest anfangs PC mit weniger gut ausgebildeten Kristalliten.

Teilkristalline Polycarbonate mit schlecht ausgebildeten Kristalliten, entsprechend niedrigem Wärmestrom von 0,1 bis 0,6 W/g, die schon im Bereich von 180 bis 190°C erweichen, können durch Tempern bei 160 bis 180°C verbessert werden. Hierbei werden die Aufschmelzbanden schmaler, die Wärmeströme größer, die Erweichungstemperaturen steigen. Eine Temperung erfordert jedoch viel Zeit, wodurch die Raum-Zeit-Ausbeute bei gegebener Apparatur absinkt. Es ist deshalb vorteilhaft, die Abscheidung in teilkristalliner Form aus CH₂Cl₂-Lösungen sogleich unter optimalen Bedingungen vorzunehmen, um für die anschließende Ausdampfung des restlichen Lösungsmittels direkt auf die höchste erreichbare Temperatur erhitzen zu können.

Die Ausdampfung vom restlichen CH₂Cl₂ aus dem erfindungsgemäß abgeschiedenem PC kann sowohl im Festbett als auch unter Umwälzung und in der Wirbelschicht, im Vakuum oder bei Normaldruck erfolgen. Dabei sollte die Einwirkung von Sauerstoff durch Verwendung eines Schutzgases, z.B. N₂, möglichst ausgeschlossen werden. Hierbei wird das teilkristalline PC auf Temperaturen von 10 bis 80°C, vorzugsweise 20 bis 60°C, unterhalb des Kristallitschmelzpunktes erhitzt.

Bevorzugt werden für die Ausdampfung Taumeltrockner verwendet. Bei einem mittleren Teilchendurchmesser von 4 mm mit nicht mehr als 2 Gew.-% Teilchen <1 mm, nicht mehr als 5 Gew.-% >6 mm und einer mittleren Aufschmelzenthalpie von 32,8 J/g und einem Wärmestrom von 0,87 W/g konnte in einem Taumeltrockner unter N₂ bei Normaldruck der CH₂Cl₂-Gehalt innerhalb 1 Stunde unter 2 ppm (Nachweisgrenze) gesenkt werden.

Es wurde überraschend gefunden, daß aus dem erfindungsgemäß in teilkristalliner Form abgeschiedenen PC auch höher als CH₂Cl₂ siedende Lösungs- und/oder Fällungsmittel, z.B. Dichlorethan, Chlorbenzol, Toluol, Xylol, Dialkylcarbonat, Cyclohexan, Isooctan, Heptan, die z.B. als Verunreinigungen im CH₂Cl₂ in das PC gelangen können, in kurzer Zeit (ca. 2 Stunden) bei erhöhter Temperatur im Bereich 120 bis 230°C, bevorzugt bei 180 bis 220°C, ausdampfbar sind bis auf Restgehalte <2 ppm. Diese höhersiedenden Lösungs- oder Fällungsmittel können sowohl einzeln als auch im Gemisch untereinander oder im Gemisch mit CH₂Cl₂ ausgedampft werden.

Selbstverständlich ist bei Anlagen zur Durchführung des erfindungsgemäßen Verfahrens der Abscheidungs- und der Ausdampfungsbereich zu einer Einheit zusammenfaßbar. In diesem Falle könnte das Produkte bei der Ausdampfung von einer Wendel durchgemischt werden.

Die vorliegende Erfindung betrifft PC auf Basis von ≧ 80 Mol-% BPA. In untergeordneter Menge, bis ca. 20 Mol-%, vorzugsweise bis zu 10 Mol-%, kann das PC auch andere Diphenole und/oder bis zu 15 Gew.-%, vorzugsweise bis zu 5 Gew.-%, Segmente entweder einzeln oder im Gemisch, in statistischer oder in Blockverteilung enthalten, falls durch deren Einkondensation die Kristallinität der Cokondensate nicht so weit gestört wird, daß die Aufschmelzenthalpie den genannten Wert von 5, vorzugsweise 20, J/g unterschreitet. Weiterhin können die gemäß der vorliegenden Erfindung abscheidbaren PC Kettenabbrecher und auch kleine Mengen Verzweiger enthalten.

Als Codiphenole, die beispielsweise der Verbesserung der Wärmeformbeständigkeit und des Brandverhaltens dienen können, kommen u.a. in Betracht:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfide,
Bis-(hydroxyphenyl)-sulfoxide,
Bis-(hydroxyphenyl)-sulfone,
α,α'-Bis-(hydroxyphenyl)-diisopropylbenzole,
sowie deren kernalkylierte und kernhalogenierte Derivate. Diese und weitere geeignete Diphenole sind z.B. in den US-PS 3 028 365, 3 275 601, 3 148 172, 3 062 781, 2 991 273 und 2 999 846 beschrieben.

Weiterhin sind zu nennen die Diphenole der allgemeinen Strukturen I und III, 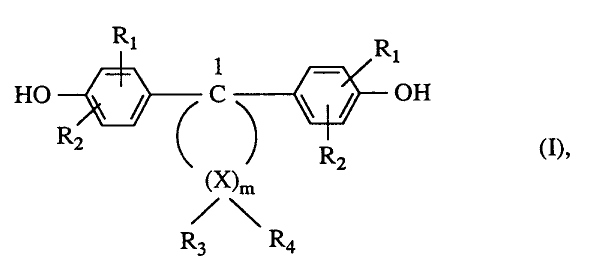
worin
- R₁ und R₂: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R₃ und R₄: für jedes X individuell wählbar, unabhängig voneinander Wasserstoff oder C₁-C₆-Alkyl
und
- X: Kohlenstoff bedeuten,
mit der Maßgabe, daß an mindestens einem Atom X, R₃ und R₄ gleichzeitig Alkyl bedeuten.

Bevorzugt sind an 1 bis 2 Atomen X, insbesondere nur an einem Atom X, R₃ und R₄ gleichzeitig Alkyl. Bevorzugter Alkylrest ist Methyl; die X-Atome in α-Stellung zu dem diphenylsubstituierten C-Atom (C-1) sind bevorzugt nicht dialkylsubstituiert, dagegen ist die Alkyldisubstitution in β-Stellung zu C₁ bevorzugt.

Die Herstellung der Diphenole I durch Kondensation aus den entsprechenden Ketonen und Phenolen sowie die Herstellung von Polycarbonaten aus den Diphenolen I und Kombination von I mit anderen Diphenolen ist in DOS 3 832 396 ausführlich beschrieben.

Von den Diphenolen der Struktur I ist Diphenol II bevorzugt. 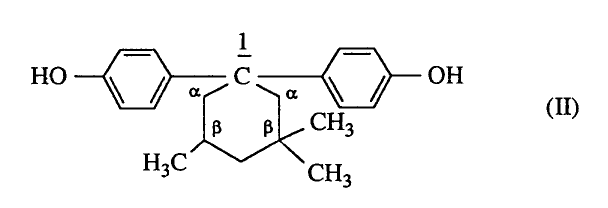
Die Diphenole III haben folgende Struktur 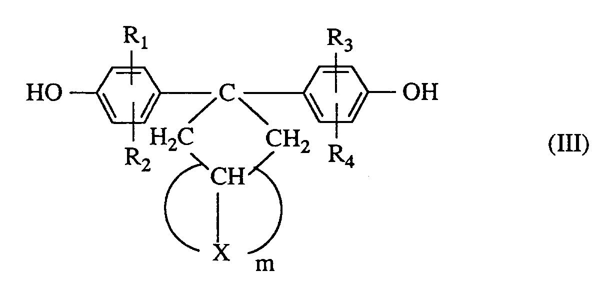
worin
- R₁, R₂, R₃, R₄: unabhängig voneinander Wasserstoff, C₁ bis C₁₂ Kohlenwasserstoff, Halogen,
- m: 2 oder 3 und
- x: Wasserstoff oder C₁-C₁₂-Kohlenwasserstoffrest, wobei mindestens 1 Rest X ein C₁-C₁₂-Kohlenwasserstoffrest ist.

Beispiele für Diphenole der Struktur III sind:
1,1-Bis-(4-hydroxyphenyl)-4-(1,1-dimethylbutyl)-cyclohexan,
1,1-Bis-(4-hydroxyphenyl)-4-(1,1,3,3-tetramethylbutyl)-cyclohexan,
1,1-Bis-(4-hydroxyphenyl)-4-phenyl-cyclohexan,
1,1-Bis-(4-hydroxyphenyl)-4-cumyl-cyclohexan,
1,1-Bis-(4-hydroxyphenyl)-4-benzyl-cyclohexan,
1,1-Bis-(4-hydroxyphenyl)-4-cyclohexyl-cyclohexan,
1,1-Bis-(4-hydroxyphenyl)-4-perhydrocumyl-cyclohexan,
1,1-Bis-(4-hydroxyphenyl)-3-phenyl-cyclohexan.

Bevorzugte Codiphenole sind:
4,4'-Dihydroxydiphenyl,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan,
2,4-Bis-(4-hydroxyphenyl)-2-methylbutan
2,2'-Bis-(4-hydroxyphenyl)-p-diisopropylbenzol,
2,2-Bis-(3-methyl-4-hydroxy-phenyl)-propan,
Bis-(4-hydroxyphenyl)-methan,
Bis-(4-hydroxyphenyl)-sulfon,
Bis-(4-hydroxyphenyl)-sulfid,
4,4'-Dihydroxy-disphenylether,
2,2-Bis-(4-hydroxyphenyl)-butan.

Als in das PC einbaubares Segment kommt beispielsweise oligomeres Siloxan mit phenolischen OH-Endgruppen in Betracht.

Als Kettenabbrecher für die aromatischen PC, die erfindungsgemäß aus ihren Lösungen abscheidbar sind, werden vorzugsweise Phenol, Alkylphenole mit C₁-C₁₂-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch C₁-C₂₂-Alkylgruppen und Halogenatome substituiert sein können, in Mengen von 0,1 bis 10 Mol-% (bezogen auf Diphenole) verwendet.

Bei Herstellung der PC nach dem PGFV können als Verzweigungsmittel beispielsweise 3- oder mehrfunktionelle Carbonsäurechloride, wie Trimesinsäuretrichlorid, Cyanursäuretrichlorid, 3,3',4,4'-Benzophenon-tetracarbonsäuretetrachlorid, 1,4,5,8-Naphthalintetracarbonsäuretetrachlorid oder Pyromellithsäuretetrachlorid, oder 3- oder mehrfunktionelle Phenole, wie Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(2-hydroxyphenyl)-cyclohexyl]-propan,
2,4-Bis-(4-hydroxyphenyl-isopropyl)-phenol,
Tetra-(4-hydroxyphenyl)-methan,
2,6-Bis-(2-hydroxy-5-methyl-benzyl)-4-methyl-phenol,
2-(4-Hydroxyphenyl)-2-(2,4-dihydroxyphenyl)-propan,
Tetra-(4-[4-hydroxyphenyl-isopropyl]-phenoxy)-methan,
1,5-Bis-[(4,4''-dihydroxytriphenyl)methyl]-benzol
in Mengen von 0,01 bis 1,0 Mol-% (bezogen auf eingesetzte Diphenole) verwendet werden.

Die Herstellung der aromatischen PC, die erfindungsgemäß aus CH₂Cl₂-Lösung abgeschieden werden können, ist bekannt und beispielsweise von H. Schnell in "Chemistry and Physics of Polycarbonates", Polymer Reviews, Vol. IX, Seite 33 ff, Interscience Publishers, 1964, beschrieben.

Die erfindungsgemäß abscheidbaren aromatischen PC haben relative Lösungsviskositäten ηrel. von 1,1 bis 2,4, vorzugsweise von 1,2 bis 1,6, gemessen mit Lösungen von 5 g Polymer in 1 l Lösung bei 25°C. Als Lösungsmittel dient Dichlormethan.

Die Schüttdichte des erfindungsgemäß abgeschiedenen und vom restlichen Lösungsmittel vollständig befreiten PC liegt im Bereich 0,5 bis 0,65 kg/l.

Die nach dem erfindungsgemäßen Verfahren mit vorgeschaltetem Phasengrenzflächenverfahren hergestellten aromatischen PC sind besonders hochwertig, da thermisch nicht besonders beansprucht und oxidativ nicht geschädigt. Sie eignen sich deshalb vorzugsweise für optische Anwendungen, bei denen nicht die geringste Verfärbung des Polymeren hingenommen werden kann.

### Beispiele

### Beispiel 1

### Herstellung von PC auf Basis BPA der relativen Lösungsviskosität (ηrel) ca. 1,2 nach dem Phasengrenzflächenverfahren (PGFV)

4.560 g (20 Mol) 2,2-Bis-(4-hydroxyphenyl)-propan, 100 g Phenol (5,3 Mol-%) wurden unter kräftigem Rühren, unter N₂ in 3.550 g 45 %iger NaOH und 25 l Wasser gelöst, dann 20 l CH₂Cl₂ zugegeben und bei ca. 20 bis 25°C 2.370 g COCl₂ innerhalb 1 Stunde eingeleitet. Durch weitere Zugabe von NaOH wird der pH-Wert während des Einleitens bei 12 bis 13 gehalten, dann 5 g N-Ethylpiperidin zugesetzt und noch 45 Minuten nachgerührt. Dann wurden die Phasen getrennt, die organische mit verdünnter Salzsäure neutral, anschließend mit entsalztem Wasser salzfrei gewaschen. Das in CH₂Cl₂ gelöste PC besaß eine relative Lösungsviskosität (ηrel) von 1,214, gemessen mit einer Lösung des PC von 0,5 g in 100 ml CH₂Cl₂-Lösung, bei 25°C.

### Beispiel 2

### Herstellung von PC auf Basis BPA der η rel. ca. 1,35 nach dem PGFV

Es wurde verfahren wie in Beispiel 1, jedoch nur 55 g Phenol (2,9 Mol-%) als Kettenabbrecher eingesetzt. Das erhaltene PC hatte eine ηrel. von 1,352.

### Beispiel 3

### Herstellung von Co-PC auf Basis BPA und 4,4'-Dihydroxydiphenylsulfid der η rel. ca. 1,35 nach dem PGFV

Es wurde verfahren wie in Beispiel 1, jedoch eine Mischung aus 4.337 g BPA (19 Mol) und 218 g 4,4'-Dihydroxydiphenylsulfid (1 Mol) sowie 66 g Phenol (3,5 Mol-%) als Kettenabbrecher eingesetzt. Das erhaltene Co-PC besaß eine ηrel. von 1,282.

### Beispiel 4

### Herstellung eines PC auf Basis BPA mit 2 Gew.-% einkondensierten Polydimethylsiloxan-Segmenten (fußend auf DE-OS 3 334 782, 3 506 472, EP-A 122 535, 135 794, DE-OS 3 344 911, 2 640 241).

In einer Lösung von 1.350 g NaOH in 28 l H₂O wurden 2.155 g BPA unter N₂ gelöst und eine Lösung von 53,6 g Isooctylphenol und 55,4 g eines Polydimethylsiloxan-Segmentes mit phenolischen OH-Endgruppen und Pₙ = 65 in 19 l CH₂Cl₂ zugesetzt. Unter heftigem Rühren erfolgte bei 20°C die Einleitung von 1.590 g COCl₂ innerhalb von 15 Minuten. Nach Beendigung der COCl₂-Einleitung wurde noch 5 Minuten weitergerührt, dann 14 ml N-Ethylpiperidin zugesetzt. Nach weiterem 45-minütigem Rühren wurden die Phasen getrennt, die organische zunächst mit HCl neutral gestellt, dann mit Wasser salzfrei gewaschen. Aus einer Probe der CH₂Cl₂-Lösung wurde das PC durch Eindampfung, zum Schluß im Vakuum, isoliert. ηrel. lag bei 1,293.

### Beispiel 5

### Abscheidung von PC in teilkristalliner, rieselfähiger Form aus CH₂Cl₂-Lösung bei Eindampfung im Kneter

Die völlig farblose CH₂Cl₂-Lösung des PC von Beispiel 1 wurde bis auf einen Feststoffgehalt von 22 Gew.-% eingeengt und 1,5 l des erhaltenen Konzentrates in einem Kneter vom Typ LK III 2 A der Firma Hermann Linden Maschinenfarbik, 5277 Marienheide, gefüllt. Der Kneter hatte ein Volumen von 2 l, am Deckel war eine Destillationsbrücke aufgesetzt, am unteren Teil des Knetertroges befand sich eine Austragsschnecke. Unter fortwährender Drehung der beiden Knetarme (ca. 60 U/min.) wurde die Heizfläche des Kneters auf ca. 70°C erhitzt. Es destillierte in großen Mengen CH₂Cl₂ ab. Bei einem PC-Gehalt von ca. 35 Gew.-% trübt sich die Lösung und geht dann schnell in rieselfähiges Granulat über. Dieses Granulat enthält zunächst noch 50 bis 60 Gew.-% CH₂Cl₂. Unter Durchmischung des Granulates wurde weiter erhitzt, bis ein CH₂Cl₂-Gehalt von ca. 30 Gew.-% erreicht war. Da die Gänge der Austragsschnecke durch kompakt auskristallisiertes PC verstopft waren, konnte der Kneter nicht mit der Austragsschnecke entleert werden. Deshalb wurde der Kneterinhalt nach Öffnung des Deckels entnommen und die Schnecke mit Lösungsmittel (CH₂Cl₂) vom auskristallisierten PC befreit. Eine Probe des Granulates wurde im Vakuum bei ca. 10 mbar auf 210°C erhitzt, nach ca. 5 Minuten ein kleiner Teil der Probe für die Differentialthermoanalyse entnommen, die Hauptmenge noch 1 Stunde weiter erhitzt. Das Material zeigte eine Aufschmelzenthalpie von 33,8 J/g, die Aufschmelzbande einen Wärmestrom von 0,83 W/g, der CH₂Cl₂-Gehalt des Endproduktes war <2 ppm (Nachweisgrenze), die Schüttdichte 0,56 g/cm³. Für die Differentialthermoanalyse wurde das Gerät Mettler DSC 30 benutzt.

### Beispiel 6

### Kontinuierliche Abscheidung des PC von Beispiel 1 aus CH₂Cl₂-Lösung auf vorgelegtem teilkristallinem, rieselfähigem Granulat im Kneter

In den im Beispiel 5 beschriebenen Kneter wurden 300 g des PC-Granulates von Beispiel 5 mit ca. 30 Gew.-% CH₂Cl₂-Gehalt gefüllt und bei kräftiger Durchmischung (ca. 60 U/min) jeweils ca. 700 g PC vom Beispiel 1 pro Stunde als ca. 22 gew.-%ige Lösung in CH₂Cl₂ auf das Granulat gegeben, das CH₂Cl₂ kontinuierlich abdestilliert, jeweils annähernd konstante CH₂Cl₂-Gehalte durch die Temperatur der Heizfläche eingestellt und das kontinuierlich nachgebildete Granulat mit Hilfe der Austragsschnecke kontinuierlich oder schubweise entnommen. Die eingestellten stationären Durchschnittsgehalte von CH₂Cl₂ im Granulat betrugen ca. 10, 18, 20, 25, 30, 40, 45, 50 Gew.-%. Die Untersuchung der Produkte erfolgte wie in Beispiel 5 beschrieben. Die Ergebnisse sind in Tabelle 1 zusammengefaßt.

### Beispiel 7 (Vergleiche)

### Kontinuierliche Abscheidung von PC aus CH₂Cl₂-Lösung auf vorgelegtem amorphem PC-Granulat im Kneter

In den in Beispiel 5 beschriebenen Kneter wurden 300 g eines amorphen PC-Granulates (ηrel. 1,241 Korndurchmesser ca. 4 mm) vorgelegt und bei kräftiger Durchmischung (ca. 60 U/min) ca. 700 g PC von Beispiel 1 pro Stunde als ca. 22 %ige Lösung in CH₂Cl₂ auf das Granulat gegeben, das CH₂Cl₂ kontinuierlich abdestilliert. Die Heizflächen des Kneters wurden bei 80°C gehalten.

Das PC schied sich zunächst nicht krümelig, teilkristallin, sondern amorph, klebrig ab und verklebte das Granulat zu einer überaus zähen Masse. Dabei verneunfachte sich ungefähr die Antriebsleistung der Kneterwellen gegenüber der bloßen Durchmischung des vorgelegten Granulates. Erst ca. 8 Minuten nach Beginn des Versuches begann das kontinuierlich als Lösung zugegebene PC langsam zu kristallisieren, wobei die Antriebsleistung langsam wieder absank. Ca. 30 Minuten nach Beginn wurde der Versuch abgebrochen. Die amorphen Granulatkörner waren in teilkristallines PC eingehüllt. Ein großer Teil des transparenten, amorphen PC war in diesen Körnern noch erhalten. Weiterhin fand sich im Kneter eine größere Menge feinteiliger Abrieb.

Die freigelegten, vorher umhüllten Granulatkörner zeigten bei der in Beispiel 5 beschriebenen Ausdampfung von restlichem CH₂Cl₂ nach 65 Minuten bei 210°C noch einen CH₂Cl₂-Gehalt von 0,32 Gew.-%. Der feinteilige Abrieb zeigte eine Aufschmelzenthalpie nach Differentialthermoanalyse von 17,9 J/g.

### Beispiel 8

### Abscheidung des PC von Beispiel 2 als teilkristallines Granulat

Es wurde verfahren analog Beispiel 5, jedoch konnte nur eine 18 %ige Lösung des PC verwendet werden, da sie bei höherer Konzentration wegen zu hoher Viskosität nicht mehr ausreichend fließfähig war. In diesem Fall wies das Produkt nach 65 Minuten Ausdampfzeit ebenfalls einen CH₂Cl₂-Gehalt <2 ppm auf. Die Aufschmelzenthalpie lag bei 32,7; bei einem Wärmestrom von 0,86.

### Beispiel 9

### Kontinuierliche Abscheidung von PC höherer Viskosität von Beispiel 2 aus CH₂Cl₂-Lösung auf vorgelegtem teilkristallinem, rieselfähigem Granulat von Beispiel 8 im Kneter

Es wurde verfahren wie bei Beispiel 6, jedoch eine ca. 18 gew.-%ige Lösung des PC verwendet. Die Egebnisse sind in Tabelle 2 zusammengefaßt.

### Beispiel 10

### Kontinuierliche Abscheidung von PC höherer Viskosität von Beispiel 2 aus CH₂Cl₂-Lösung auf vorgelegtem teilkristallinem, rieselfähigem Granulat im 80 l-Kneter, Typ VK 80 der Firma Werner & Pfleiderer

In den Kneter wurden 30 kg teilkristallines, rieselfähiges PC (ηrel. 1,352) mit einem CH₂Cl₂-Gehalt von ca. 30 Gew.-% gefüllt. Die beiden Knetarme drehten sich mit 30 bzw. 20 U/min. Die Heizflächen wurden mit 8 bar Dampf beheizt. Über eine Brücke konnte aus dem Kneter CH₂Cl₂ abdestilliert werden.

Als ca. 18 %ige Lösung in CH₂Cl₂ wurden unter diesen Bedingungen 18,5; 25 und 28 kg PC pro Stunde kontinuierlich und gleichmäßig auf das umgewälzte Granulat gegeben, mit einer Austragschnecke schubweise Granulat entnommen, dabei der ursprüngliche Füllstand im Kneter annähernd gehalten. Es stellte sich dabei im Granulat ein annähernd konstanter CH₂Cl₂-Durchschnittsgehalt von 11,6; 28,3; 49,7 Gew.-% ein. Die an den erhaltenen Produkten ermittelten Meßdaten sind in Tabelle 3 zusammengestellt.

Gegenüber der Leistungsaufnahme des Kneterantriebes bei Durchmischung des rieselfähigem, teilkristallinen Granulates trat bei der Zugabe der PC-Lösungen keine nennenswerte Vergrößerung der Leistungsaufnahme auf.

### Beispiel 11

### Abscheidung des PC von Beispiel 3 in teilkristalliner, rieselfähiger Form aus CH₂Cl₂-Lösung im Kneter

Gemäß Beispiel 5 wurden 1,5 l einer ca. 21 %igen Lösung von PC aus Beispiel 3 in den Kneter gefüllt und weiterverfähren wie in Beispiel 5 beschrieben. Das erhaltene teilkristalline Granulat zeigte eine Aufschmelzenthalpie von 24,4 J/g, einen Wärmestrom der Aufschmelzbande von 0,69. Ein Restmethylenchlorid-Gehalt von <2 ppm wurde erst nach 4,5 Stunden erreicht. Die Ausdampfung konnte, wie auch bei Beispiel 12, bei maximal 190°C durchgeführt werden wegen Gefahr der Erweichung des Produktes.

### Beispiel 12

### Kontinuierliche Abscheidung von PC aus Beispiel 3 aus CH₂Cl₂-Lösung auf vorgelegtem teilkristallinem, rieselfähigem Granulat im Kneter

Die Abscheidung erfolgte analog Beispiel 6 bei einer Heizflächentemperatur von 80°C. Die kontinuierlich zugeführte Lösung von PC aus Beispiel 3 besaß eine Konzentration von ca. 21 Gew.-%, der stationäre Durchschnitts-CH₂Cl₂-Gehalt im umgewälzten Granulat betrug ca. 30 Gew.-%. Die Aufschmelzenthalpie lag bei 25,6 J/g, der Wärmestrom der Aufschmelzbande bei 0,72 W/g. Das kontinuierlich entnommene Produkt enthielt 2,3 Gew.-% Staub.

### Beispiel 13

### Abscheidung des PC mit Siloxan-Segment von Beispiel 4 in teilkristalliner, rieselfähiger Form aus CH₂Cl₂-Lösung im Kneter

Gemäß Beispiel 5 wurden 1,5 l einer ca. 19 %igen Lösung des PC von Beispiel 4 in den Kneter gefüllt und weiter verfahren wie in Beispiel 5 beschrieben. Das erhaltene teilkristalline Granulat hatte eine Aufschmelzenthalpie von 25,8 J/g, einen Wärmestrom der Aufschmelzbande von 0,67. Ein Restmethylenchlorid-Gehalt von <2 ppm wurde nach ca. 7 Stunden erreicht. Die Ausdampfung konnte, wie auch bei Beispiel 14, bei maximal 190°C durchgeführt werden wegen Gefahr der Erweichung des Produktes.

### Beispiel 14

### Kontinuierliche Abscheidung von PC aus Beispiel 4 aus CH₂Cl₂-Lösung auf vorgelegtem teilkristallinem, rieselfähigem Granulat im Kneter

Die Abscheidung erfolgte analog Beispiel 6 bei einer Heizflächentemperatur von 80°C. Die kontinuierlich zugeführte Lösung von PC aus Beispiel 4 hatte eine Konzentration von ca. 19 Gew.-%, der Durchschnitts-CH₂Cl₂-Gehalt im umgewälzten Granulat lag bei 31,6 Gew.-%. Die Aufschmelzenthalpie betrug 26,2 J/g, der Wärmestrom der Aufschmelzbande 0,78 W/g. Das kontinuierlich entnommene Granulat enthielt 2,1 Gew.-% Staub.

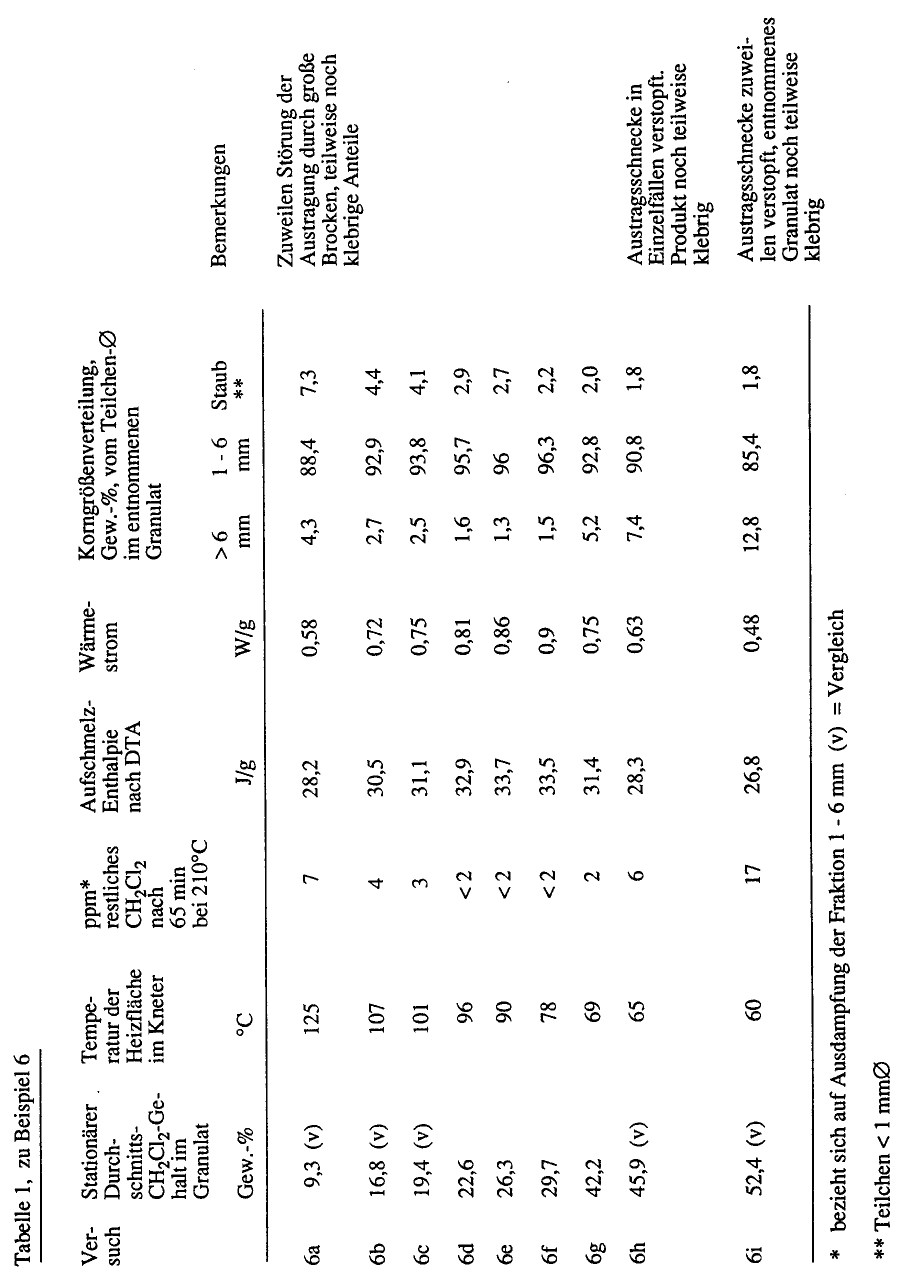

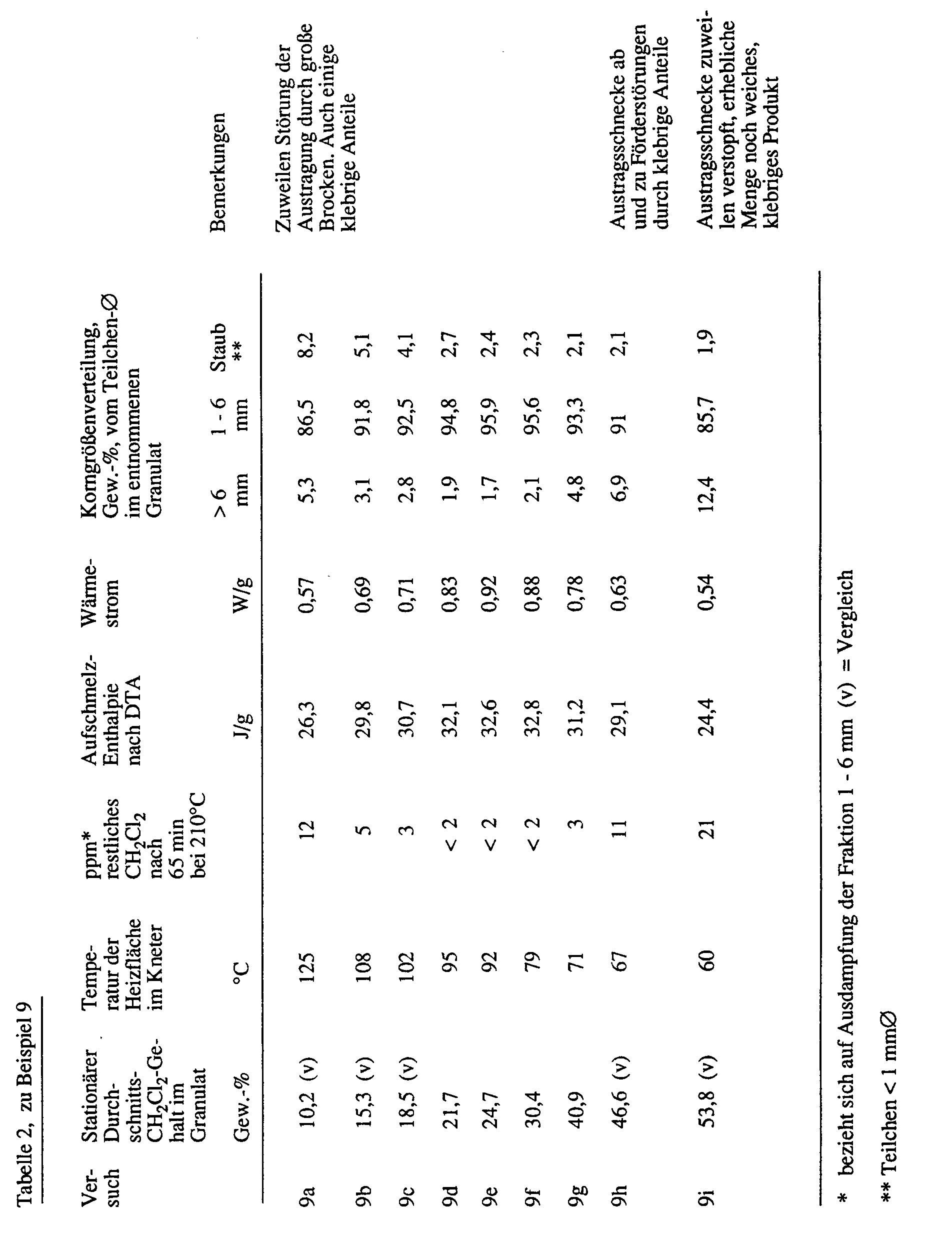

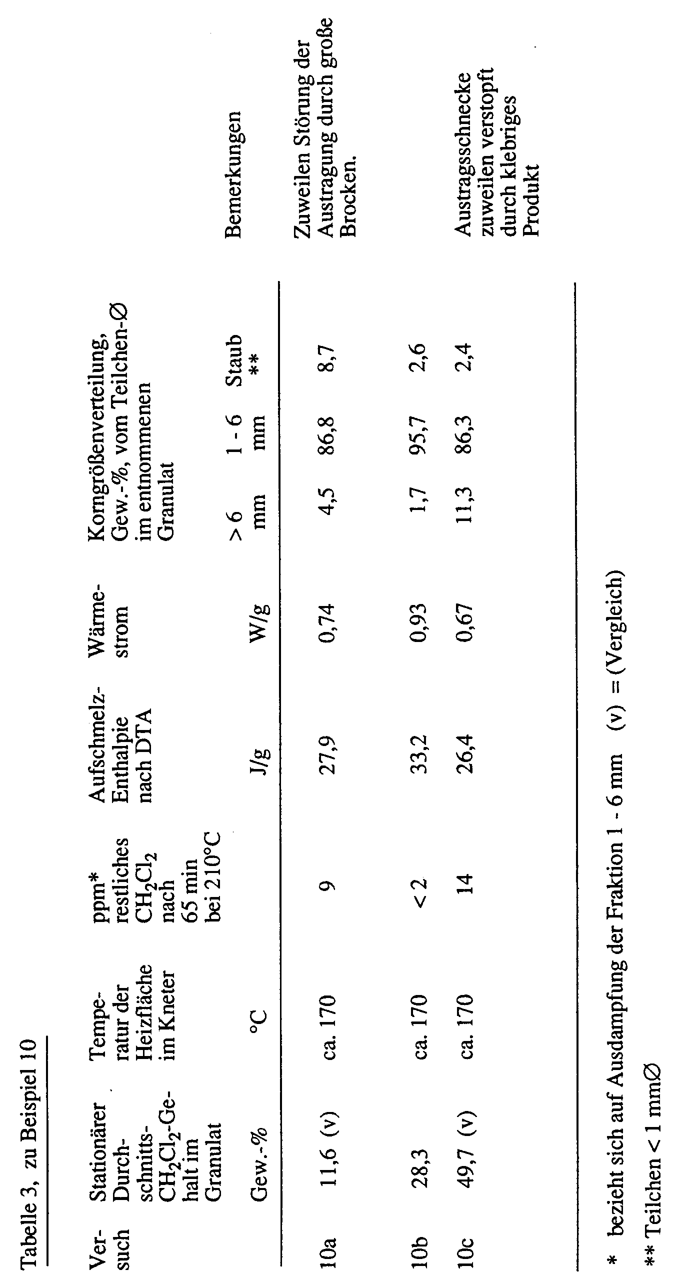

## Patentansprüche

1. Verfahren zur kontinuierlichen oder schubweisen Überführung von PC auf Basis von ≧ 80 Mol-% BPA aus einer Lösung in CH₂Cl₂ in ein teilkristallines, rieselfähiges Granulat durch Aufgabe dieser Lösung auf vorgelegtes teilkristallines PC-Granulat unter Verdampfung des Lösungsmittels in einer Vorrichtung zur Durchmischung dieses Granulates, unter fortwährender oder schubweiser Ausschleusung von Granulat, dadurch gekennzeichnet, daß in dem fortwährend durchmischten, rieselfähigen, teilkristallinen PC-Granulat ein mittlerer CH₂Cl₂-Gehalt von 21 bis 45 Gew.-% gehalten wird.

2. Verfahren nach Anspruch 1, dadurch gekennzeichnet, daß in dem fortwährend durchmischten, rieselfähigen, teilkristallinen PC-Granulat ein mittlerer CH₂Cl₂-Gehalt von 22 bis 43 Gew.-% gehalten wird.

3. Verfahren nach Anspruch 1, dadurch gekennzeichnet, daß in dem fortwährend durchmischten, rieselfähigen, teilkristallinen PC-Granulat ein mittlerer CH₂Cl₂-Gehalt von 25 bis 40 Gew.-% gehalten wird.

4. Verfahren nach den Ansprüchen 1 bis 3, dadurch gekennzeichnet, daß das fortwährend oder schubweise ausgeschleuste, teilkristalline, rieselfähige PC-Granulat eine durch Differentialthermoanalyse bestimmbare Aufschmelzenthalpie von 5 bis 65 J/g besitzt.

5. Verfahren zur kontinuierlichen oder schubweisen Überführung von PC auf Basis von ≧ 80 Mol-% BPA aus einer Lösung in CH₂Cl₂ in ein teilkristallines, rieselfähiges Granulat unter Verdampfung des Lösungsmittels in einer Vorrichtung zur Durchmischung dieses Granulates, unter fortwährender oder schubweiser Ausschleusung von Granulat, bei Einhaltung eines durchschnittlichen CH₂Cl₂-Gehaltes von 21 bis 45 Gew.-%, in dem umgewälzten, riesel fähigen, teilkristallinen Granulat, dadurch gekennzeichnet, daß das ausgeschleuste, teilkristalline Polycarbonat eine durch Differentialthermoanalyse bestimmte Aufschmelzenthalpie von 20 bis 45 J/g besitzt.

6. Verfahren nach Anspruch 5, dadurch gekennzeichnet, daß das teilkristalline PC bei der Differentialthermoanalyse im Bereich der Aufschmelzbande einen Wärmestrom im Bereich 0,6 bis 1 W/g besitzt.

7. Verfahren zur Ausdampfung von Restlösungsmittel aus in teilkristalliner Form abgeschiedenem aromatischem Polycarbonat gemäß Anspruch 1, dadurch gekennzeichnet, daß das teilkristalline PC auf Temperaturen von 10 bis 80°C, unterhalb des Kristallitschmelzpunkts im Vakuum oder bei Normaldruck erhitzt wird.

8. Verfahren nach Anspruch 7, dadurch gekennzeichnet, daß aus den teilkristallin abgeschiedenen PC auch andere Lösungsmittel als CH₂Cl₂ bis auf Restgehalte <2 ppm ausgedampft werden.

## Claims

1. A process for the continuous or batchwise conversion of PC based on ≧80 mol-% BPA from a solution in CH₂Cl₂ into partly crystalline, free-flowing granules by addition of said solution to partly crystalline PC granules introduced beforehand with evaporation of the solvent in a device for mixing said granules with continuous or batchwise discharge of granules, characterised in that an average CH₂Cl₂ content of 21 to 45 wt.% is maintained in the continuously mixed, free-flowing, partly crystalline PC granules.

2. A process according to claim 1, characterised in that an average CH₂Cl₂ content of 22 to 43 wt.% is maintained in the continuously mixed, free-flowing, partly crystalline PC granules.

3. A process according to claim 1, characterised in that an average CH₂Cl₂ content of 25 to 40 wt.% is maintained in the continuously mixed, free-flowing, partly crystalline PC granules.

4. A process according to claims 1 to 3, characterised in that the partly crystalline, free-flowing PC granules discharged continuously or batchwise have an enthalpy of fusion, as may be determined by differential thermal analysis, of 5 to 65 J/g.

5. A process for the continuous or batchwise conversion of PC based on ≧ 80 mol-% BPA from a solution in CH₂Cl₂ into partly crystalline, free-flowing granules with evaporation of the solvent in a device for mixing said granules with continuous or batchwise discharge of granules, an average CH₂Cl₂ content of 21 to 45 wt.% being maintained in the circulated, free-flowing, partly crystalline granules, characterised in that the partly crystalline polycarbonate discharged has an enthalpy of fusion as determined by differential thermal analysis of 20 to 45 J/g.

6. A process according to claim 5, characterised in that, in differential thermal analysis, the partly crystalline PC has a heat flow of 0.6 to 1 W/g in the region of the fusion band.

7. A process for the evaporation of residual solvent from aromatic polycarbonate deposited in partly crystalline form according to claim 1, characterised in that the partly crystalline PC is heated to temperatures of 10 to 80°C below the crystallite melting point in vacuo or under normal pressure.

8. A process according to claim 7, characterised in that solvents other than CH₂Cl₂ are also evaporated to residual contents of <2 ppm from the PC deposited in partly crystalline form.

## Revendications

1. Procédé pour faire passer en continu ou en discontinu un PC à base de 80 moles % ou plus de BPA en solution dans le chlorure de méthylène à l'état de granulés partiellement cristallisés et qui s'écoulent bien par introduction de cette solution sur des granulés de PC partiellement cristallisés, avec vaporisation du solvant, dans un appareil pour mélange de ces granulés, avec évacuation continue ou discontinue des granulés, caractérisé en ce que dans les granulés de PC partiellement cristallisés et qui s'écoulent bien, à l'état de mélange permanent, on maintient une teneur moyenne en CH₂Cl₂ de 21 à 45 % en poids.

2. Procédé selon la revendication 1, caractérisé en ce que dans les granulés de PC partiellement cristallisés et qui s'écoulent bien, à l'état de mélange permanent, on maintient une teneur moyenne en CH₂Cl₂ de 22 à 43 % en poids.

3. Procédé selon la revendication 1, caractérisé en ce que dans les granulés de PC partiellement cristallisés et qui s'écoulent bien, à l'état de mélange permanent, on maintient une teneur moyenne en CH₂Cl₂ de 25 à 40 % en poids.

4. Procédé selon les revendications 1 à 3, caractérisé en ce que les granulés de PC partiellement cristallisés et qui s'écoulent bien, évacués en continu ou en discontinu, ont une enthalpie de fusion, déterminée par thermoanalyse différentielle, de 5 à 65 J/g.

5. Procédé pour faire passer en continu ou en discontinu un PC à base de 80 moles % ou plus de BPA en solution chlorométhylénique, à l'état de granulés partiellement cristallisés et qui s'écoulent bien, avec évaporation du solvant dans un appareil servant au mélange de ces granulés et évacuation continue ou discontinue des granulés, dans lequel on maintient une teneur moyenne en CH₂Cl₂ de 21 à 45 % en poids dans les granulés partiellement cristallisés et qui s'écoulent bien en rotation, caractérisé en ce que le polycarbonate partiellement cristallisé évacué a une enthalpie de fusion, déterminée par thermoanalyse différentielle, de 20 à 45 J/g.

6. Procédé selon la revendication 5, caractérisé en ce que le PC partiellement cristallisé possède à la thermoanalyse différentielle, dans la région de la bande de fusion, un courant de chaleur dans l'intervalle de 0,6 à 1 W/g.

7. Procédé pour évaporer le solvant résiduel d'un polycarbonate aromatique séparé à l'état partiellement cristallisé selon la revendication 1, caractérisé en ce que l'on chauffe le PC partiellement cristallisé à des températures de 10 à 80°C au-dessous du point de fusion des cristallites, sous vide ou à pression normale.

8. Procédé selon la revendication 7, caractérisé en ce que, à partir du PC séparé à l'état partiellement cristallisé, on évapore des solvants autres que le chlorure de méthylène jusqu'à des teneurs résiduelles inférieures à 2 ppm.
